Europäisches Patentamt

(19) European Patent Office

Office européen des brevets

(11) Numéro de publication: **0 098 003**
**B1**

(12) **FASCICULE DE BREVET EUROPEEN**

(45) Date de publication du fascicule du brevet: 28.01.87

(51) Int. Cl.⁴: **H 04 L 27/12**

(21) Numéro de dépôt: 83200903.9

(22) Date de dépôt: 20.06.83

(54) **Circuit d'émission pour des modems utilisant la modulation par déplacement de fréquence.**

(30) Priorité: 25.06.82 FR 8211203

(43) Date de publication de la demande:
11.01.84 Bulletin 84/02

(45) Mention de la délivrance du brevet:
28.01.87 Bulletin 87/05

(84) Etats contractants désignés:
BE CH DE FR GB IT LI NL SE

(56) Documents cités:
EP-A-0 017 301
DE-A-2 612 764

ELECTRONICS AND COMMUNICATIONS IN JAPAN, vol. 57-A, no. 2, 1974, pages 29-38, Washington, US; S. SHIMADA et al.: "FS modulator suitable for hybrid IC"

ELEKTOR, vol. 6, no. 7/8, juillet/aou7t 1980, page 7-40, Canterbury, GB; A. VAN GINNEKEN: "Precision VCO"

(73) Titulaire: TELECOMMUNICATIONS RADIOELECTRIQUES ET TELEPHONIQUES T.R.T.
88, rue Brillat Savarin
F-75013 Paris (FR)

(72) Inventeur: Boudault, Robert
SOCIETE CIVILE S.P.I.D. 209 rue de l'Université
F-75007 Paris (FR)

(74) Mandataire: Charpail, François et al
Société Civile S.P.I.D. 209, rue de l'Université
F-75007 Paris (FR)

(56) Documents cités:
ELECTRONIC ENGINEERING, vol. 54, no. 663, mars 1982, pages 23-27, Londres, GB; W.N. CHEUNG: "A simplified approach to function generation"

TOUTE L'ELECTRONIQUE, no. 381, octobre 1973, pages 55-59, Paris, FR; H. SCHREIBER: "Modernisation d'un générateur H.F."

Courier Press, Leamington Spa, England.

# Description

L'invention concerne un circuit d'émission convenant pour des modems utilisant la modulation par déplacement de fréquence et connectables à une voie de transmission dans laquelle la transmission des données peut s'effectuer par un couple de fréquences basses ou un couple de fréquences hautes, ce circuit d'émission comportant un modulateur et un circuit de filtrage, le modulateur étant constitué par un circuit intégrateur dont la sortie est relié à l'entrée d'une bascule à seuil avec hystérésis, la sortie de cette bascule étant connectée à l'entrée du circuit intégrateur par l'intermédiaire d'un réseau de résistances à commander par le signal de données à transmettre pour modifier le courant fourni au circuit intégrateur de façon que ce dernier fournisse un signal triangulaire dont la fréquence dépend du signal de données.

Des modems utilisant le circuit d'émission envisagé ci-dessus répondent par exemple à l'avis V23 du CCITT qui recommande, pour une transmission à basse vitesse allant jusqu'à 75 bauds, les deux fréquences basses 390 Hz et 450 Hz et, pour une transmission à vitesse élevée allant jusqu'à 1200 bauds, les deux fréquences hautes 1300 Hz et 2100 Hz. Cet avis recommande de plus, pour une transmission jusqu'à 600 bauds les deux fréquences hautes 1700 Hz et 2100 Hz. Dans d'autres standards tels que le standard US Bell 203, des transmissions à basse vitesse et à vitesse élevée sont effectuées à l'aide de fréquences basses et de fréquences hautes assez voisines de celles préconisées par le CCITT. Aux deux extrémités d'une liaison utilisant ces modems, on doit employer d'un côté, un modem émettant des données à basse vitesse et recevant des données à vitesse élevée, et de l'autre côté, un modem inverse émettant des données à vitesse élevée et recevant des données à basse vitesse.

Pour des questions de coût de fabrication et de maintenance, il est évidemment souhaitable de ne fabriquer qu'un seul type de modem, facilement réglable en usine pour être adapté à un standard de fréquences et pouvant être commandé de façon logique sur le lieu d'installation pour réaliser un modem d'une extrémité ou de l'autre. En ce qui concerne le circuit d'émission de ce type unique de modem, son modulateur doit être conçu pour que le réglage en usine permette de fournir, avec la précision élevée requise, toutes les fréquences possibles d'un standard et pour qu'une commande logique permette de l'affecter à la fourniture soit des fréquences basses, soit des fréquences hautes, soit d'une fréquence supplémentaire. D'autre part le circuit de filtrage du circuit d'émission doit être conçu pour que les signaux émis en direction du modem distant ne perturbent pas le circuit de réception local, à travers le trajet imtempestif engendré par les imperfections inévitables du coupleur deux fils-quatre fils couplant le modem à une voie de transmission deux fils. Enfin, le circuit d'émission envisagé doit être conçu pour permettre un test local du modem, réalisé en bouclant l'émetteur sur le récepteur de ce modem, les éléments de cette boucle devant inclure le nombre maximum de circuits utilisés en fonctionnement normal.

Le modulateur envisagé ci-dessus pour fournir des signaux triangulaires est du genre décrit dans la demande de brevet europeen n° 17 301. Toutefois ce modulateur connu n'a été conçu que pour fournir deux fréquences basses ou deux fréquences hautes, séparées par le même déplacement de fréquence, ce qui n'est pas le cas du modulateur envisagé ici pour lequel les déplacements de fréquence sont différents pour le couple de fréquences basses et le couple de fréquences hautes. Par ailleurs le réseau de résistances et sa commande prévus dans le modulateur connu ne permettent pas de régler en usine les fréquences d'émission possibles, indépendamment les unes des autres, ce qui conduit, pour répondre à la précision des fréquences requises, soit à un réglage coûteux, soit a l'utilisation de composants précis, donc coûteux également.

Pour réaliser le circuit de filtrage d'émission du type unique de modem envisagé, une solution possible consiste à utiliser un filtre limiteur de bande, commutable pour transmettre sur une bande de largeur limitée soit le signal émis avec les deux fréquences basses, soit le signal émis avec les deux fréquences hautes. Un tel filtre doit pouvoir être commuté pour réaliser l'un ou l'autre des deux modems d'extrémité d'une liaison ou à l'occasion du test local du modem. Mais un tel filtre commutable, qui peut être par exemple du genre décrit dans le demande de brevet français n° 2 485 306, pour un système de test local d'un modem, est assez coûteux aussi bien par le nombre de composants employés que par les réglages en usine nécessaires.

La présente invention permet d'éviter toutes ces difficultés en fournissant un circuit d'émission simple à réaliser, avec un modulateur commutable et adaptable à différents standards et avec un circuit de filtrage convenant sans commutation pour toutes les fréquences d'émission possibles.

Conformément à l'invention, dans un circuit d'émission pour modems à déplacement de fréquences, le réseau de résistances inclus dans le modulateur est formé de deux branches en parallèle comprenant chacune en série, une première résistance connectée du côté de la bascule à seuil et une deuxième résistance, les premières résistances des deux branches étant court-circuitables par un couple de premiers commutateurs analogiques tandis que l'une des branches comporte en outre un deuxième commutateur analogique en série avec la deuxième résistance, les premiers commutateurs étant commandés ensemble par le signal de données pour fournir, selon la position du deuxième commutateur, soit le couple de fréquences basses, soit le couple de fréquences hautes, le circuit de filtrage comportant un circuit suppresseur d'harmonique qui est agencé pour modifier la forme du signal triangulaire fourni par le modulateur de façon à supprimer les harmoniques indésirables des deux fréquences basses, qui sont situés dans la bande de fréquences du circuit de réception local des deux fréquences élevées.

Dans le circuit d'émission de l'invention, le circuit suppresseur d'harmoniques prévu dans le circuit de filtrage peut être avantageusement un circuit conformateur à diodes, agencé pour modifier la forme du signal triangulaire fourni par le modulateur de façon à obtenir un signal à forme triangulaire ne contenant pas les harmoniques indésirables des fréquences basses.

Dans le cas par exemple du standard du CCITT, les harmoniques indésirables à supprimer sont les harmoniques 3 et 5 des fréquences basses 390 et 450 Hz, qui sont situés dans la bande de réception du récepteur local. Un avantage supplémentaire est la suppression gratuite des harmoniques 3 et 5 des féquences hautes 1300 (ou 1700) et 2100 Hz, qui sont situés en dehors de la bande du canal de transmission, ce qui facilite la construction du filtre passe-bas d'adaptation au canal de transmission.

La description suivante, en regard des dessins annexés, le tout donné à titre d'exemple, fera bien comprendre comment l'invention peut être réalisée.

La figure 1 représente le schéma du circuit d'émission conforme à l'invention.

La figure 2 est un tableau illustrant comment le réseau de résistances du modulateur peut être réglé et commandé pour adapter le circuit d'émission à un standard et à un type de modem.

La figure 3 est un diagramme illustrant la fonction d'un conformateur à diodes pour la suppression de harmoniques indésirables.

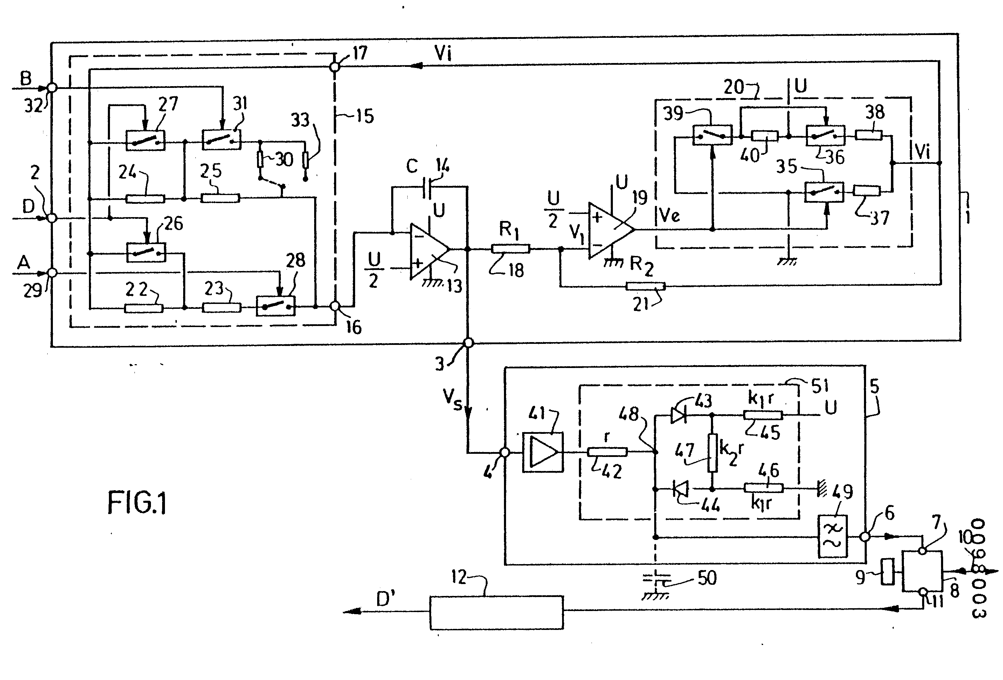

Le circuit d'émission conforme à l'invention et représenté sur la figure 1, convient pour des modems utilisant la modulation par déplacement de fréquence. Il comporte un modulateur 1 qui reçoit sur sa borne 2 le signal D des données à transmettre et dont la sortie 3 est connectée à l'entrée 4 d'un circuit de filtrage 5. Pour une bonne compréhension de la suite de la description, on suppose que ce circuit d'émission est utilisé dans un modem connecté à une ligne de transmission deux fils. Dans ce cas, la sortie 6 du circuit de filtrage est reliée dans ce modem à l'accès émission 7 d'un coupleur deux fils-quatre fils 8 muni d'une impédance d'équilibrage 9. L'accès ligne de ce coupleur est relié à la ligne de transmission 10. Enfin, l'accès réception 11 du coupleur est relié à l'entrée d'un circuit de réception 12 chargé de restituer le signal de données D' émis à l'aide d'un modem non représenté, connecté à l'autre extrémité de la ligne de transmission 10.

Pour répondre par exemple au standard défini par l'avis V23 du CCITT, les modems d'une extrémité doivent émettre des données à l'aide des fréquences basses 390 Hz et 450 Hz et recevoir des données transmises à l'aide des fréquences hautes 1300 Hz et 2100 Hz (ou 1700 Hz et 2100 Hz) tandis que les modems de l'autre extrémité doivent émettre des données à l'aide desdites fréquences hautes et recevoir des données à l'aide desdites fréquences basses.

Pour répondre à un autre standard, tel que le standard US Bell 203, les fréquences basses à utiliser sont 387 Hz et 487 Hz, les fréquences hautes sont 1200 Hz et 2200 Hz, tandis qu'une fréquence supplémentaire de 900 Hz doit être prévue pour des fonctions de signalisation.

La précision de fréquence requise dans ces deux standards doit être meilleure que 0,5%.

La présente invention vise à fournir un circuit d'émission de type unique, avec un modulateur 1 permettant de réaliser, par réglage en usine, des modems des deux standards et permettant, par des commandes logiques, d'engendrer n'importe quelle fréquence parmi les cinq fréquences utilisées dans chaque standard, et avec un circuit de filtrage 5 évitant que les signaux émis n'atteignent avec un niveau gênant le circuit de réception local 12, via le trajet intempestif entre les bornes 7 et 11 du coupler 8.

Le modulateur 1 utilisé dans le circuit d'émission de l'invention comporte un circuit intégrateur formé par un amplificateur opérationnel 13, par un condensateur 14 de capacité C connecté entre l'entrée inverseuse et la sortie de l'amplificateur 13, et enfin par un réseau de résistances 15 dont une borne 16 est reliée à l'entrée inverseuse de l'amplificateur 13 et dont l'autre borne 17 reçoit une tension bivalente $V_I$ formée comme on l'expliquera plus loin. La valeur ohmique R du réseau 15 entre ses bornes 16 et 17 est à commander en particulier par le signal de données D appliqué sur la borne 2 du modulateur. L'amplificateur opérationnel 13 est alimenté par une source de tension d'alimentation U dont l'une des bornes est au potentiel 0 de la masse. L'entrée non inverseuse de l'amplificateur 13 est portée à la tension U/2. Son signal de sortie constitue le signal de sortie $V_s$ du modulateur 1.

La sortie de l'amplificateur opérationnel 13 est reliée par l'intermédiaire d'une résistance 18 de valeur $R_1$ à l'entrée inverseuse d'un amplificateur opérationnel 19 formant un circuit comparateur. Ce circuit comparateur 19 est également alimenté par la source de tension U et son entrée non inverseuse est portée à la tension U/2. La sortie du circuit comparateur 19 est reliée à un circuit 20 alimenté par la source de tension U et ayant la fonction d'un circuit logique inverseur. La sortie du circuit inverseur 20 est reliée d'une part à la borne 17 du réseau de résistances 15 et d'autre part à une borne d'une résistance 21 de valeur $R_2$, dont l'autre borne est connectée à l'entrée inverseuse du circuit comparateur 19.

Cet agencement du circuit comparateur 19 avec le circuit inverseur 20 constitue une bascule à seuil avec hystérésis, ayant comme signal d'entrée, la tension $V_1$ appliquée à l'entrée inverseuse du circuit comparateur 19 et, comme signal de sortie, la tension bivalente $V_I$ fournie par le circuit inverseur 20. En effet la tension de sortie $V_I$ passe brusquement de la valeur 0 à la valeur U quand la tension d'entrée $V_1$ devient juste plus grande que la tension U/2 et passe brusquement de la valeur U à la valeur 0, quand la tension

d'entrée $V_1$ devient juste plus faible que la tension U/2. Une hystérésis analogue à celle d'un montage connu sous le nom de bascule de Schmidt, se produit du fait que, quand la tension de sortie $V_i$ passe de 0 à U, la tension d'entrée $V_1$ monte brusquement de la valeur U/2 à une valeur plus grande que U/2 et dépendant du rapport de résistances R1/R2 et quand la tension de sortie $V_i$ tombe de U à 0, la tension d'entrée $V_1$ tombe brusquement de la valeur U/2 à une valeur plus faible que U/2 et dépendant également du rapport de résistances R1/R2.

Le modulateur que l'on vient de décrire est du genre décrit dans la demande de brevet français précitée n° 79 08 725. On peut montrer que le signal de sortie $V_s$ de ce modulateur a une forme triangulaire symétrique, avec une valeur moyenne U/2 et une fréquence définie par l'expression

$$f = \frac{1}{4(R1/R2).R.C},$$

dans laquelle interviennent les paramètres $R_1$, $R_2$, R et C déjà définis.

La présente invention fournit en particulier les moyens de réaliser le réseau de résistances 15 à valeur ohmique R réglable et commutable pour réaliser les conditions définies plus haut.

Ce réseau 15 est formé de deux branches en parallèle connnectées entre les bornes 16 et 17. Une branche comporte en série les résistances 22 et 23 et l'autre branche les résistances 24 et 25. Les résistances 22 et 24 reliées à la borne 17 du réseau et dites premières résistances des deux branches sont court-circuitables à l'aide d'une paire de premiers commutateurs analogiques 26 et 27 commandés ensemble par le signal de données D, appliqué sur la borne 2 du modulateur. La deuxième résistance 23 est reliée à la borne 16 du réseau à travers un deuxième commutateur analogique 28 commandé par un signal logique de commande A qui apparaît sur la borne de commande 29 du modulateur et qui sert à choisir soit les deux fréquences basses, soit les deux fréquences hautes. Enfin, sur l'autre deuxième résistance 25 reliée directement à la borne 16 du réseau, on peut connecter en parallèle une troisième résistance 30, à l'aide d'un troisième commutateur analogique 31 commandé par le signal logique de commande B qui apparaît sur la borne de commande 32 du modulateur et qui sert par exemple à remplacer l'une des fréquences hautes par une autre, comme le recommande le CCITT. En remplaçant la résistance 30 par la résistance 33, on peut encore obtenir une autre fréquence haute, sous la commande du signal B.

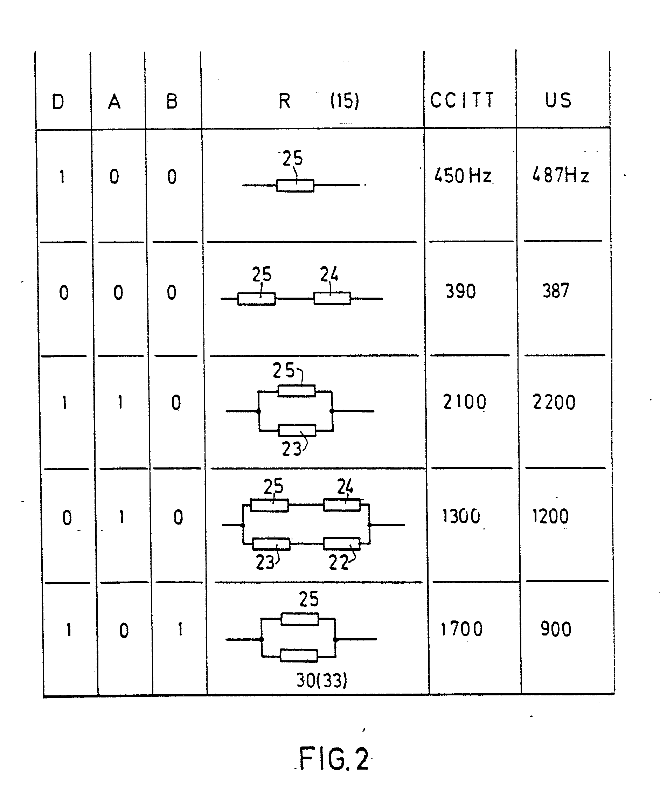

Le tableau de la figure 2 montre en fonction du signal de données D et des signaux logiques de commande A et B, la configuration du réseau de résistances 15 et les fréquences correspondantes qui peuvent être obtenues dans le standard du CCITT et le standard US. On suppose que que les commutateurs analogiques sont fermés ou ouverts selon que leurs signaux de commande ont la valeur "1" ou "0".

Pour le réglage en usine des fréquences d'un standard, on procède dans l'ordre des fréquences allant de haut en bas sur le tableau. En se plaçant dans la configuration de la première ligne on voit ainsi que le réglage de la résistance 25 permet d'obtenir la fréquence 450 Hz dans le standard du CCITT (ou la fréquence 487 Hz dans le standard US). En se plaçant dans la configuration de la deuxième ligne, on voit que le réglage de la résistance 24 permet d'obtenir la fréquence 390 Hz du CCITT (ou la fréquence 387 Hz du standard US). De la même manière, en se plaçant successivement dans les configurations de la troisième, de la quatrième et de la cinquième ligne, les réglages successifs des résistances 23, 22 et 30 (ou 33), peremettant d'obtenir successivement les fréquences 2100, 1300, 1700 Hz du CCITT (ou les fréquences 2200, 1200, 900 Hz du standard US). Une variante du processus de réglage des fréquences, consiste à régler la première fréquence 450 Hz (ou 487 Hz) à l'aide de la résistance 18 de la bascule, avec une résistance 25 fixe, les autres fréquences étant ensuite réglées comme on vient de la décrire.

Il est clair qu'avec ce processus de réglage, chaque réglage de fréquence n'a aucune influence sur les fréquences réglées antérieurement et n'est pas influencé par les imperfections des réglages antérieurs. Les commutateurs analogiques utilisées pour établir le réseau 15 dans ses différentes configurations, présentent des résistances parasites ayant des valeurs typiques telles que 300 ohms quand ces commutateurs sont fermés et $10^9$ ohms quand ces commutateurs sont ouverts. Les résistances du réseau 15 sont choisies dans une gamme de valeurs telles que la résistance R de ce réseau n'est pratiquement pas influencée par ces résistances parasites. Si les résistances du réseau 15 sont réalisées par un dépôt conducteur sur une plaque isolante, elles peuvent être réglées avec précision, au laser.

Par un réglage en usine effectué comme on vient de la décrire, on peut donc affecter le modulateur 1 à un standard déterminé, avec des fréquences définies avec précision. On peut ensuite, sur le lieu d'installation du modem, adapter le modulateur à la transmission des données, par fréquences basses ou par fréquences hautes, en choisissant la valeur du signal logique A appliqué sur la borne 29 du modulateur. Le signal logique B appliquér sur la borne 32 offre la possibilité d'une fréquence supplémentaire.

Le courant de charge du circuit intégrateur comprenant le réseau de résistances 15 et le condensateur 14 est fourni par la sortie du circuit inverseur 20. Pour que ce courant de charge soit bien calibré, le circuit inverseur 20 doit présenter une impédance de sortie faible devant la résistance minimale de réseau 15, une bonne stabilité en température et commuter des tensions stables. Pour réaliser ces conditions, il est avantageux que le circuit inverseur 20, soit entièrement réalisé à l'aide de commutateurs analogiques alimentés par le potentiel zéro de la masse ou la tension U d'alimentation et montés comme l'indique la figure 1.

Le circuit 20 comporte les commutateurs analogiques 35 et 36 dont les bornes d'entrée reçoivent respectivement la tension zéro de la masse et la tension U et dont les bornes de sortie sont interconnectées à travers les résistances de protection 37 et 38 de faible valeur pour former la sortie du circuit inverseur 20. Ces deux commutateurs 35 et 36 sont commandés de façon complémentaire à partir de la tension $V_e$ fournie par le circuit comparateur 19. Pour cela, la tension $V_e$ commande directement le commutateur 35 et un autre commutateur analogique 39. Ce dernier a sa borne de sortie reliée à la masse et sa borne d'entrée reliée à la borne d'alimentation à la tension U, à travers la résistance de protection 40. La tension sur cette borne d'entrée sert à commander le commutateur 36. Il est aisé de voir qu'avec des commutateurs analogiques ouverts ou fermés selon que leur tension de commande est O ou U, la tension de sortie $V_i$ du circuit 20 prend les valeurs O ou U, selon que sa tension d'entrées $V_e$ prend les valeurs U ou O. Le circuit 20 joue donc le rôle d'un inverseur logique.

Aucune autre commutation que celles à effectuer dans le modulateur, n'est nécessaire pour adapter le circuit d'émission de l'invention à un modem transmettant par les fréquences basses ou à un modem transmettant par les fréquences hautes. En effet le circuit de filtrage 5 du circuit d'émission convient sans adaptation pour ces deux modems. Ce circuit de filtrage 5 a essentiellement deux fonctions: une première fonction est de limiter la bande de fréquences du signal transmis vers le récepteur distant, pour l'adapter à la largeur du canal de transmission. Cette fonction peut être exercée par un filtre passe-bas, affaiblissant en dehors de la bande téléphonique. Une deuxième fonction du circuit de filtrage 5 est d'affaiblir les composantes de fréquences du signal issu du modulateur 1 qui sont situées dans la bande du circuit de réception local 12. Pour exercer cette deuxième fonction, on effectue généralement une modification par commutation dans la fonction de filtrage du circuit de filtrage 5, quand on passe d'un modem transmettant par fréquences basses à un modem transmettant par fréquences hautes. En effet, en prenant l'exemple des fréquences du standard du CCITT, quand un modem local utilise pour la transmission, les fréquences basses 390 et 450 Hz, son circuit de réception doit recevoir dans une bande recouvrant largement les fréquences hautes 1300 et 2100 Hz et s'étendant par exemple de 1000 Hz à 2400 Hz. Comme des harmoniques des fréquences basses émises tombent dans cette bande de réception et peuvent constituer un signal gênant pour le circuit de réception 12, le circuit de filtrage 5 est, dans les solutions connues, ocmmuté dans une configuration pour affaiblir ces harmoniques gênants. Inversement, lorsque le modem local utilise pour la transmission les fréquences hautes 1300—2100 Hz, le circuit de filtrage 5 est commuté dans une autre configuration pour transmettre toutes les composantes dans la bande de réception (1000 Hz à 2400 Hz) du modem distant.

La présente invention fournit une autre solution, permettant d'éviter cette commutation, en munissant le circuit de filtrage 5 d'un circuit suppresseur des harmoniques des fréquences basses, qui tombent dans la bande de réception du circuit de réception 12 des fréquences élevées. Avec la modulateur du circuit d'émission de l'invention, qui fournit des signaux triangulaires, n'ayant que des harmoniques impairs, d'amplitude $A/k^2$ (k étant le rang de l'harmonique), seuls des harmoniques impairs sont à supprimer. Dans l'exemple des fréquencies du CCITT, sont à supprimer les harmoniques 3 et 5 des fréquences basses 390 et 450 Hz, qui tombent dans la bande de réception d'environ 1000 à 2400 Hz du circuit de reception.

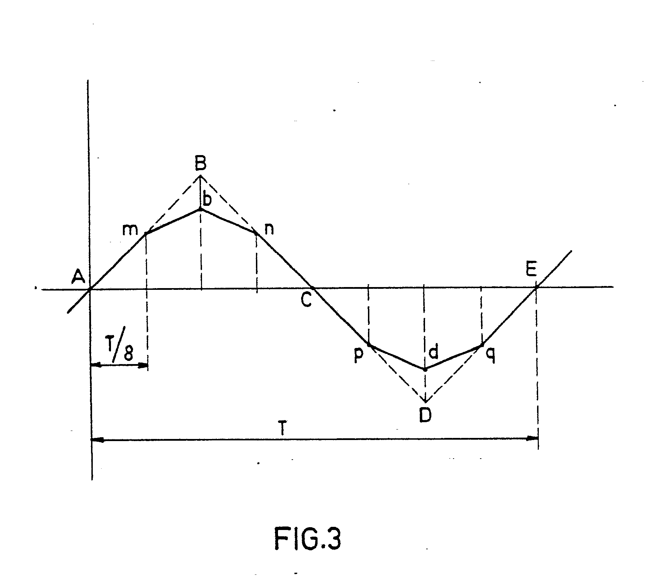

On peut montrer, par l'analyse de Fourier, que certains harmoniques impairs d'un signal triangulaire peuvent être complètement supprimés, en modifiant la forme de ce signal triangulaire de façon à le remplacer par un signal à forme polygonale appropriée, constituant une aproximation d'une sinusoïde. Pour supprimer par exemple les harmoniques 3 et 5, il suffit d'opérer comme l'illustre la figure 3.

Sur cette figure 3, le signal triangulaire initial, variable autour de la tension moyenne U/2, est représenté pendant une période T, par la ligne A B C D E. Pour supprimer les harmoniques 3 et 5, on peut montrer qu'il suffit de modifier le signal initial, de telle sorte qu'au cours d'une période, il revête la forme représentée par la ligne AmbnCpdqE définie pour des points séparés de l'intervalle de temps T/8. On voit d'apres la figure 3 qu'entre les points A et m, le signal modifié est identique au signal initial, avec la pente de variation P. Entre les points m et b, le signal modifié est différent du signal initial et varie avec la pente $P(\sqrt{2}{-}1)$. Entre les points b et n, la pente du signal modifié est $- P(\sqrt{2}{-}1)$ et entre les points n et C sa pente est la même que la pente $-$ P du signal initial. Entre les points C et E, le signal modifié varie avec des pentes de signes opposés à celles apparaissant entre les points A et C. Avec un tel signal modifié, l'amplitude des harmoniques autres que les harmoniques 3 et 5, n'est pas changée.

Un circuit de filtrage 5, utilisant le procédé illustré par la figure 3, peut être réalisé selon le schéma représenté sur la figure 1. Dans ce circuit, le signal de sortie $V_s$ du modulateur est appliqué à un amplificateur 41 pour être amené à un niveau convenable pour le circuit suppresseur d'harmonique 51. Ce dernier est un circuit conformateur à diodes qui comporte une résistance 42 de valeur r reliée d'un côté à la sortie de l'amplificateur 41 et de l'autre, aux électrodes opposées des deux diodes 43 et 44. L'autre électrode de la diode 43 est reliée à la borne d'alimentation à la tension U, par l'intermédiaire de la résistance 45 de valeur $k_1r$; l'autre électrode de la diode 44 est reliée à la borne d'alimentation à la masse, par l'intermédiaire de la résistance 46 de valeur $k_1r$. Enfin les électrodes des diodes 43 et 44, reliées aux résistances 45 et 46, sont de plus interconnectées à travers la résistance 47 de valeur $k_2r$. La tension de sortie de ce conformateur à diodes est prise sur la borne 48 interconnectant la résistance 42 et les diodes 43 et 44.

Dans ce conformateur à diodes, les diodes 43 et 44 peuvent être passantes ou non passantes selon la tension appliquée à l'entrée du conformateur et selon les valeurs des résistances 42, 45, 46 et 47. Quand aucune diode n'est passante, la tension de sortie du conformateur varie comme sa tension d'entrée; quand l'une ou l'autre des diodes 43 et 44 est passante, la tension de sortie du conformateur varie selon une pente positive ou négative définie par les paramètres $k_1$ et $k_2$. Des calculs usuels peremettent de déterminer des paramètres $k_1$ et $k_2$ peremettant d'obtenir à la sortie une tension variant comme l'indique la figure 3.

Le signal de sortie du conformateur à diodes 51, ainsi débarrassé des harmoniques 3 et 5 indésirables, est appliqué à un filtre passe-bas 49 qui adapte le signal transmis vers le récepteur distant, au canal de transmission. Ce filtre passe-bas peut être construit de façon usuelle pour affaiblir les fréquences au-delà de 3500 Hz environ. Cette fonction peut être éventuellement complétée à l'aide d'un condensateur 50 représenté en traits pointillés, qui est connecté entre la sortie du conformateur à diodes 41 et la masse et qui, avec la résistance 42, exerce également un filtrage passe-bas.

Avec le circuit de filtrage 5 ainsi constitué, lorsque le modulateur 1 du modèm est établi pour transmettre des fréquences basses, on supprime donc automatiquement les harmoniques 3 et 5 indésirables pour le circuit de réception local 12. Mais de plus, lorsque le modulateur 1 est établi pour transmettre les fréquences hautes (1300 et 2100 Hz par exemple) les harmoniques 3 et 5 de ces fréquences hautes sont également supprimés. Ces harmoniques qui ne sont pas gênants dans ce cas pour le circuit de réception local 12, sont toutefois situés en dehors de la bande du canal de transmission et leur suppression automatique permet de simplifier la construction du filtre passe-bas 49.

Dans le cas d'autres standards de fréquence, pour lesquels d'autres harmoniques indésirables pour le circuit de réception local devraient être supprimés, on peut utiliser un conformateur à diodes plus complexe, transformant le signal triangulaire en un signal à forme polygonale, différente de celle de la figure 3 et ne comportant pas ces harmoniques indésirables.

Le circuit d'émission de l'invention que l'on vient de décrire est tout à fait adapté pour réaliser le test en boucle 3 du modem, préconisé par le CCITT. Pour effectuer ce test, le circuit d'émission est bouclé sur le circuit de réception 12 du modem, en déséquilibrant par exemple le coupleur 8. Pour tester le modem, le modulateur 1 est commandé, de façon que sous l'action du signal de test, il émette les fréquences basses ou les fréquences hautes ou toute autre fréquence possible située dans la bande du circuit de réception 12. A l'encontre du système de test préconisé dans la demande de brevet précitée n° 2 485 306, le circuit de filtrage 5 n'a pas besoin d'être modifié pour réaliser le test du modem.

**Revendications**

1. Circuit d'émission convenant pour des modems utilisant la modulation par déplacement de fréquence et connectables à une voie de transmission dans laquelle la transmission des données peut s'effectuer par un couple de fréquences basses ou un couple de fréquences hautes, ce circuit d'émission comportant un modulateur (1) et un circuit de filtrage (5), le modulateur étant constitué par un circuit intégrateur (13, 14) dont la sortie est reliée à l'entrée d'une bascule à seuil avec hystérésis (19—21), la sortie de cette bascule étant connectée à l'entrée du circuit intégrateur par l'intermédiaire d'un réseau de résistances (15) à commander par le signal de données à transmettre (D) pour modifier le courant fourni au circuit intégrateur de façon que ce dernier fournisse un signal triangulaire dont la fréquence dépend du signal de données, caractérisé en ce que le réseau de résistances du modulateur est formé de deux branches en parallèle comprenant chacune en série, une première résistance (22, 24) connectée du côté de la bascule à seuil et une deuxième résistance (23, 25), les premières résistances des deux branches étant court-circuitables par un couple de premiers commutateurs analogiques (26, 27) tandis que l'une des branches comporte en outre un deuxième commutateur analogique (28) en série avec la deuxième résistance (23), les premiers commutateurs (26, 27) étant commandés ensemble par le signal de données pour fournir, selon la position du deuxième commutateur (28), soit le couple de fréquences basses, soit le couple de fréquences hautes, le circuit de filtrage comportant un circuit suppresseur d'harmoniques (51) qui est agencé pour modifier la forme du signal triangulaire fourni par le modulateur de façon à supprimer les harmoniques indésirables des deux fréquences basses, qui sont situés dans la bande de fréquences du circuit de réception local des deux fréquences élevées.

2. Circuit d'émission selon la revendication 1, caractérisé en ce que, pour obtenir au moins une autre fréquence supplémentaire, le réseau de résistances du modulateur est muni en outre d'une troisième résistance qui est connectée aux bornes de la deuxième résistance de l'une des branches, par l'intermédiaire d'un troisième commutateur analogique qui est commandé pour être fermé, pour obtenir une fréquence supplémentaire.

3. Circuit d'émission selon l'une des revendications 1 et 2, caractérisé en ce que le réglage des fréquences susceptibles d'être fournies par le modulateur est réalisé par le réglage des résistances du réseau de résistances, en opérant dans un ordre tel que le réglage de chaque fréquence s'effectue au moyen d'une seule résistance, sans influencer les fréquences déjà réglées.

4. Circuit d'émission selon l'une des revendications 1 à 3, dans lequel le modulateur comporte pour former la bascule à seuil avec hystérésis, un circuit comparateur dont une entrée reçoit une tension fixe et l'autre entrée est connectée à travers une résistance à la sortie d'un circuit inverseur connecté à la sortie du comparateur, la sortie de ce circuit inverseur constituant la sortie de la bascule, caractérisé en ce que le circuit inverseur est formé à l'aide de deux commutateurs analogiques dont les bornes d'entrée sont connectées respectivement aux deux bornes d'une source d'alimentation, dont les bornes de sortie sont interconnectées pour former la borne de sortie du circuit inverseur, ces deux commutateurs étant commandés de façon complémentaire à partir de la tension de sortie du circuit comparateur, au moyen d'un autre commutateur analogique.

5. Circuit d'émission selon l'une des revendications 1 à 4, caractérisé en ce que dans le circuit de filtrage, le circuit suppresseur d'harmoniques est un circuit conformateur à diodes, agencé pour modifier la forme du signal triangulaire fourni par la modulateur de façon à obtenir un signal à forme polygonale ne contenant pas les harmoniques indésirables des fréquences basses.

6. Circuit d'émission selon l'une des revendications 1 à 5, convenant pour des modems pouvant transmettre des données par des fréquences - basses d'environ 390 et 450 Hz et par des fréquences hautes d'environ 1300 (ou 1700) et 2100 Hz, caractérisé en ce que le circuit suppresseur d'harmoniques est prévu pour supprimer les harmoniques 3 et 5 desdites fréquences basses.

**Patentansprüche**

1. Sendeschaltung, geeignet für Modems, die Frequenzverschiebungsmodulation benutzen und die an eine übertragungsstrecke anschliessbar sind, in der die übertragung der Daten mittels eines Niederfrequenzpaares oder eines Hochfrequenzpaares erfolgen kann, welche Sendeschaltung einen Modulator (1) und eine Filterschaltung (5) aufweist, wobei der Modulator aus einem Integratorkreis (13, 14) besteht, dessen Ausgang mit einem Eingang einer Flip-Flop-Schaltung mit Schwellen-Hysterese (19—21) verbunden ist, wobei der Ausgang dieser Flip-Flop-Schaltung mittels eines von dem zu übertragenden Datensignal (D) zu steuernden Widerstandsnetzwerkes (15) mit dem Eingang des Integratorkreises verbunden ist um den dem Integratorkreis zugeführten Strom derart zu ändern, dass letzterer ein Dreiecksignal liefert, dessen Frequenz von dem Datensignal abhängig ist, dadurch gekennzeichnet, dass das Widerstandsnetzwerk des Modulators durch zwei parallele Zweige gebildet ist, die je eine Reihenschaltung aus einem ersten mit der Schwellen-Flip-Flop-Schaltung verbundenen Widerstand (22, 24) ist und einem zweiten Widerstand (23, 25) aufweisen, wobei die ersten Widerstände der zwei Zweige durch ein Paar erster analoger Schalter (26, 27) kurzgeschlossen werden können, während einer der Zweige ausserdem in Reihe mit dem zweiten Widerstand (23) einen zweiten analogen Schalter (28) aufweist, wobei die ersten Schalter (26, 27) gemeinsam von dem Datensignal gesteuert werden zum abhängig von der Stellung des zweiten Schalters (28) Liefern entweder des Niederfrequenzpaares oder des Hochfrequenzpaares, wobei die Filterschaltung eine Oberwellenunterdrückungsschaltung (51) aufweist, welche dazu eingerichtet ist, die Form des von dem Modulator gelieferten Dreiecksignals derart zu ändern, dass unerwünschten Oberwellen der zwei Niederfrequenzen, die in dem Frequenzbereich des Ortsempfangskreises der zwei Hochfrequenzen liegen, unterdrückt werden.

2. Sendeschaltung nach Anspruch 1, dadurch gekennzeichnet, dass zum Erhalten mindestens einer weiteren zusätzlichen Frequenz das Widerstandsnetzwerk des Modulators ausserdem mit einem dritten Widerstand versehen ist, der mit den Anschlüssen des zweiten Widerstandes eines der Zweige verbunden ist über einen dritten analogen Schalter, der zum Erhalten einer zusätzlichen Frequenz in den geschlossenen Zustand geschaltet wird.

3. Sendeschaltung nach einem der Ansprüche 1 und 2, dadurch gekennzeichnet, dass die Regelung der von dem Modulator zu liefernden Frequenzen durch Regelung der Widerstände des Widerstandsnetzwerkes erfolgt, wobei die Reihenfolge der Regelungen derart vorgenommen wird, dass die Regelung jeder Frequenz mittels eines einzigen Widerestandes durchgeführt wird, ohne dass die bereits eingeregelten Frequenzen beeinflusst werden.

4. Sendeschaltung nach einem der Ansprüche 1 bis 3, in der der Modulator zum Bilden der Flip-Flop-Schaltung mit Schwellen-Hysterese eine Vergleichsschaltung aufweist, von der ein Eingang eine feste Spannung erhält und der andere Eingang über einen Widerstand mit dem Ausgang eines Inverters verbunden ist, der mit dem Ausgang der Vergleichsschaltung verbunden ist, wobei der Ausgang dieses Inverters den Ausgang der Flip-Flop-Schaltung bildet, dadurch gekennzeichnet, dass der Inverter mit Hilfe zweier analoger Schalter gebildet wird, deren Eingangsklemmen mit zwei Anschlüssen einer Speisequelle verbunden sind und deren Ausgangsklemmen miteinander verbunden sind zum Bilden der Ausgangsklemme des Inverters, wobei diese zwei Schalter auf komplementäre Weise mittels eines weiteren analogen Schalters von der Ausgangsspannung der Vergleichsschaltung gesteuert werden.

5. Sendeschaltung nach einem der Ansprüche 1 bis 4, dadurch gekennzeichnet, dass die Ober-

# 0 098 003

wellenunterdrückungsschaltung in der Filterschaltung ein Wellenformer mit Dioden ist, der dazu eingerichtet ist, die Form des von dem Modulator gelieferten Dreiecksignals derart zu ändern, dass ein vieleckförmiges Signal ohne die unerwünschten Oberwellen der Niederfrequenzen erhalten wird.

6. Sendeschaltung nach einem der Ansprüche 1 bis 5, geeignet für Modems, die Daten übertragen können mittels Niederfrequenzen von etwa 390 und 450 Hz und mittels Hochfrequenzen von etwa 1300 (oder 1700) und 2100 Hz, dadurch gekennzeichnet, dass die Oberwellenunterdrückungsschaltung zum Unterdrücken der 3. und 5. Oberwellen der genannten Niederfrequenzen vorgesehen ist.

## Claims

1. A transmission circuit suitable for modems employing frequency shift keying and being connectable to a transmission path in which data transmission can be effected by a couple of low frequencies or a couple of high frequencies, this transmission circuit comprising a modulator (1) and a filter circuit (5), the modulator being constituted by an integrating circuit (13, 14) whose output is connected to the input of a bistable circuit having trigger hysteresis (19—21), the output of this bistable circuit being connected to the input of the integrating circuit through a resistor network (15) to be controlled by the data signal to be transmitted (D) to modify the current applied to the integrating circuit in such a way that the latter produces a triangular signal whose frequency depends on the data signal, characterized in that the resistor network included in the modulator is formed by two parallel branches each comprising the series arrangement of a first resistor (22, 24) connected to the bistable circuit and a second resistor (23, 25), the first resistors of the two branches being short-circuitable by a couple of first analog switches (26, 27), while one of the branches further comprises a second analog switch (28) in series with the second resistor (23), the first switches (26, 27) being together controlled by the data signal for supplying, depending on the position of the second switch (28), either the couple of low frequencies or the couple of high frequencies, the filter circuit comprising a harmonics suppressing circuit (51) which is arranged for modifying the shape of the triangular signal supplied by the modulator so as to suppress the unwanted harmonics of the two low frequencies which are located in the frequency band of the local receiving circuit for the two high frequencies.

2. A transmission circuit as claimed in Claim 1, characterized in that, in order to obtain at least one further additional frequency, the resistor network of the modulator further comprises a third resistor which is connected to the terminals of the second resistor of one of the two branches through a third analog switch which is controlled to be closed for obtaining the additional frequency.

3. A transmission circuit as claimed in one of the Claims 1 and 2, characterised in that the adjustment of the frequencies to be supplied by the modulator is realized by adjusting the resistors of the resistor network, acting in such a sequence that the adjustment of each frequency is effected by means of one single resistor, without the already adjusted frequencies being affected.

4. A transmission circuit as claimed in any of the Claims 1 to 3, in which the modulator comprises, to provide the bistable circuit having trigger hysteresis, a comparator an input of which receives a fixed voltage and the other input is connected through a resistor to the output of an inverter connected to the output of the comparator, the output of this inverter forming the output of the bistable circuit, characterized in that the inverter is formed with the aid of two analog switches whose input terminals are respectively connected to two terminals of a supply source and whose output terminals are interconnected to provide the output terminal of the inverter, these two switches being controlled in a complementary way from the output voltage of the comparator by means of a further analog switch.

5. A transmission circuit as claimed in any of the Claims 1 to 4, characterized in that the harmonics suppressing circuit in the filter circuit is a wave-shaping circuit having diodes and being arranged for modifying the shape of the triangular signal supplied by the modulator so as to obtain a signal having a polygonal shape which does not contain the unwanted harmonics of the low frequencies.

6. A transmission circuit as claimed in any of the Claims 1 to 5, suitable for modems which are capable of transmitting data by low frequencies of approximately 390 and 450 Hz and by high frequencies of approximately 1300 (or 1700) and 2100 Hz, characterized in that the harmonics suppressing circuit is provided to suppress the third and fifth harmonics of the said low frequencies.

FIG.1

| D | A | B | R (15) | CCITT | US |
|---|---|---|---|---|---|
| 1 | 0 | 0 | | 450 Hz | 487Hz |
| 0 | 0 | 0 | | 390 | 387 |
| 1 | 1 | 0 | | 2100 | 2200 |
| 0 | 1 | 0 | | 1300 | 1200 |
| 1 | 0 | 1 | | 1700 | 900 |

FIG.2

FIG.3